# EUROPEAN PATENT APPLICATION

(11) **EP 1 282 187 A2**
(43) Date of publication of application: **05.02.2003**
(21) Application number: 02016753.2
(22) Date of filing: 26.07.2002
(51) Int. Cl.: H01M 10/40, H01M 10/04

(54) **Totally solid type polymer lithium ion secondary battery and manufacturing method of the same**

(30) Priority: 27.07.2001 JP 2001227536; 23.07.2002 JP 2002213527
(71) Applicant: NISSAN MOTOR CO., LTD., Yokohama-shi Kanagawa-ken (JP)
(72) Inventor: Takahashi, Yukinori, Yokohama-shi, Kanagawa-ken (JP); Uemura, Ryuzo, Miura-shi, Kanagawa-ken (JP); Hamada, Kenji, Yokohama-shi, Kanagwawa-ken (JP); Oshawa, Yasuhiko, Yokosuka-shi, Kanagawa-ken (JP)
(74) Representative: Weber, Joachim, Dr.

(57) **Abstract**

A first manufacturing method of a totally solid polymer secondary battery includes laminating a first quasi-positive electrode layer (20a) on a positive electrode current collector (25), laminating a polymer solid electrolyte layer (10) and a second quasi-positive electrode layer (20b) on the negative electrode layer (30), and adhering the first and second quasi-positive electrode layers to each other. A second manufacturing method of the same includes laminating a positive electrode layer (20) and a first quasi-polymer solid electrolyte layer (10a) on a positive electrode current collector (25), laminating a negative electrode layer (30) and a second quasi-polymer solid electrolyte layer (10b) on a negative electrode current collector, and adhering the first and second quasi-polymer solid electrolyte layers to each other. A third manufacturing method of the same includes laminating a positive electrode layer (20), a polymer solid electrolyte layer (10) and a first quasi-negative electrode layer (30a) on a positive electrode current collector (25), forming a second quasi-negative electrode layer (30b) on a negative electrode current collector (35), and adhering the first and second quasi-negative electrode layers to each other.

## Description

### BACKGROUND OF THE INVENTION

### 1. Field of the Invention

The present invention relates to a totally solid type polymer lithium ion secondary battery and a manufacturing method of the same.

### 2. Description of the Related Art

Attention has been focused on a lithium ion secondary battery of large discharge capacity as a battery for use in electronic appliances such as portable phones and personal computers. As this lithium ion secondary battery, though a cubic type battery such as a cylindrical battery and a box type battery has heretofore been a mainstream, a sheet type lithium ion secondary battery has recently been investigated from the viewpoint of compact size and light weight. Although organic electrolyte solution has been used as electrolyte of the lithium ion secondary battery, technologies using solid or gelationous polymer electrolytes has been developed.

Japanese Patent Publications H10-67849 (published in 1998) and H10-60210 (published in 1998) discloses a manufacturing method of a battery. In this method, a polymer electrolyte film is prepared, this polymer electrolyte film is attached tightly to a platinum electrode or a lithium metal electrode, and the film is adhered to the electrode by preserving them under heating conditions for several hours.

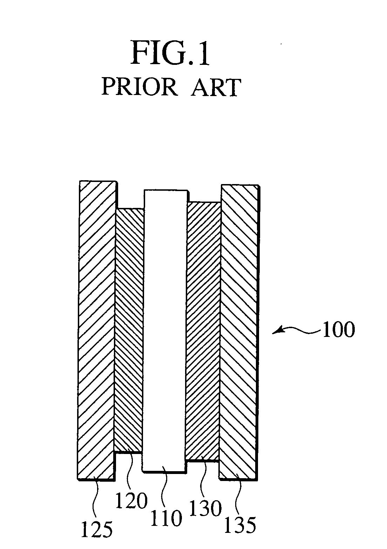

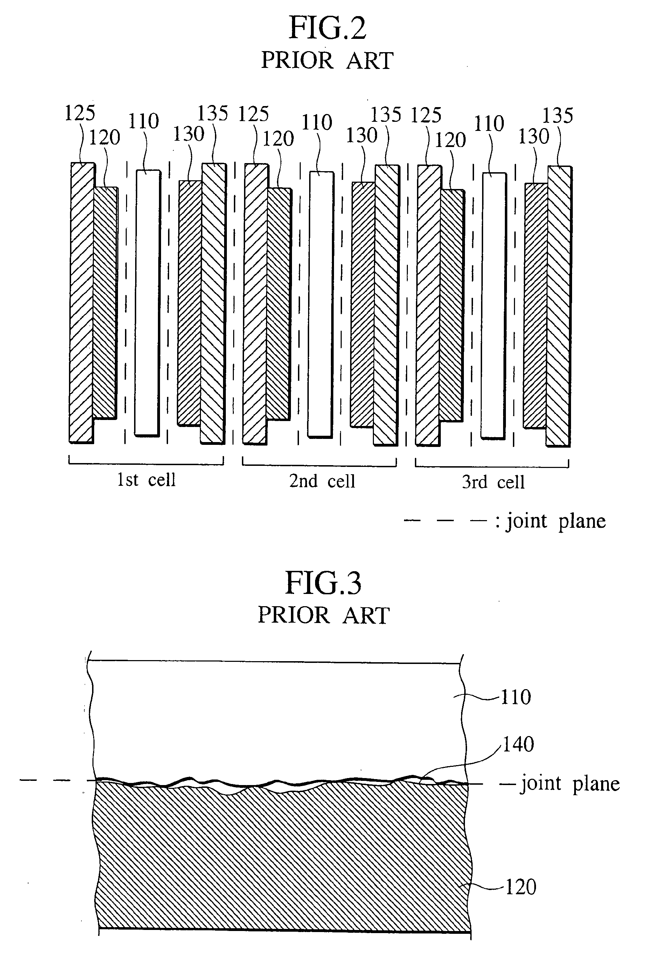

Fig. 1 is a schematic view illustrating a structure of a single cell 100 of the totally solid type polymer lithium ion secondary battery using polymer solid electrolyte. As shown in Fig. 1, the single cell 100 is constituted by a polymer solid electrolyte layer 110, a positive electrode 120, a current collector for a positive electrode 125 (hereinafter referred to as a positive electrode current collector), a negative electrode layer 130 and a negative electrode current collector 135. When three single cells 100 are laminated, as shown in Fig.2, a structural body obtaining by coating a material of the positive electrode layer 120 onto the positive electrode current collector 125 is prepared and dried. Also a structural body obtained by coating a material of the negative electrode layer 130 onto the negative electrode current collector 135 is prepared and dried. Then the polymer solid electrolyte layer 110 is sandwiched by these structural bodies to be tightly attached to each other, thus forming a three-cell lamination battery. Accordingly, a boundary between the positive electrode layer 120 and the polymer solid electrolyte layer 110, and a boundary between the negative electrode layer 130 and the polymer solid electrolyte layer 110 are joint planes, respectively.

### SUMMARY OF THE INVENTION

However, in the totally solid type polymer lithium ion secondary battery fabricated by use of the conventional pressurized attachment method, when either the positive electrode layer 120 or the negative electrode layer 130 is jointed to the polymer solid electrolyte layer 110, the joint plane between them is dried. Accordingly, it has been difficult to form a joint plane having no gap perfectly by the pressurized attachment method. For example, as shown in Fig. 3, a gap 140 that is a non-jointed portion often remains on the joint plane between the polymer solid electrolyte layer 110 and the positive electrode layer 120. A similar gap remains also on the joint plane between the polymer solid electrolyte layer 110 and the negative electrode layer 130.

Because the gap remaining on the joint plane decreases a substantial ion conductivity of lithium ions and increases internal resistance of the battery, this gap causes a decrease in energy output efficiency of the whole of the lithium ion battery.

An object of the present invention is to increase output efficiency of electric energy by lowering the internal resistance of a totally polymer lithium ion secondary battery to increase battery reaction efficiency.

To achieve the above object, according to a first aspect of a manufacturing method of a totally solid type polymer lithium ion secondary battery of the present invention, a first quasi-positive electrode layer is first formed on a positive electrode current collector. Subsequently, a negative electrode layer is formed on a negative electrode current collector, and a polymer solid electrolyte layer is formed on this negative electrode layer, followed by a formation of a second quasi-positive electrode layer on this polymer solid electrolyte layer. Thereafter, the first and second quasi-positive electrode layers are adhered to each other, and thus a positive electrode layer is formed.

According to a second aspect of a manufacturing method of a totally solid type lithium ion secondary battery of the present invention, a positive electrode layer is first formed on a positive electrode current collector, and a first quasi-polymer solid electrolyte layer is formed on the positive electrode layer. A negative electrode layer is formed on a negative electrode current collector, and a second quasi-polymer solid electrolyte layer is formed on the negative electrode layer. Thereafter, the first and second quasi-polymer solid electrolyte layers are adhered to each other, and thus a polymer solid electrolyte layer is formed.

According to a third aspect of a manufacturing method of a totally solid type polymer lithium ion secondary battery of the present invention, a positive electrode layer is formed on a positive electrode current collector, and a polymer solid electrolyte layer is formed on the positive electrode layer, followed by a formation of a first quasi-negative electrode layer on the polymer solid electrolyte layer. Subsequently, a second quasi-negative electrode layer is formed on a negative electrode current collector. Thereafter, the first and second quasi-negative electrode layers are adhered to each other, and thus a negative electrode layer is formed.

A first aspect of a totally solid type polymer lithium ion secondary battery of the present invention is the one fabricated by the manufacturing method of a totally solid type polymer lithium ion secondary battery of the first aspect, which includes a positive electrode current collector, a positive electrode layer disposed on the positive electrode current collector, and a polymer solid electrolyte layer disposed on the positive electrode layer. The positive electrode layer is formed by adhering a first quasi-positive electrolyte layer and a second quasi-positive electrolyte layer to each other. Further, the battery includes a polymer solid electrolyte layer disposed on the positive electrode layer, a negative electrode layer disposed on the polymer solid electrolyte layer, and a negative electrode current collector disposed on the negative electrode layer.

A second aspect of a totally solid type polymer lithium ion secondary battery of the present invention is the one fabricated by the manufacturing method of a totally solid type polymer lithium ion secondary battery of the second aspect, which includes a positive electrode current collector, a positive electrode layer disposed on the positive electrode current collector, and a polymer solid electrolyte layer disposed on the positive electrode layer. The polymer solid electrolyte layer is formed by adhering a first quasi-polymer solid electrolyte layer and a second quasi-polymer solid electrolyte layer to each other. Further, the battery includes a negative electrode layer disposed on the polymer solid electrolyte layer, and a negative electrode current collector disposed on the negative electrode layer.

A third aspect of a totally solid type polymer lithium ion secondary battery of the present invention is the one fabricated by the manufacturing method of a totally solid type polymer lithium ion secondary battery of the third aspect, which includes a positive electrode current collector, a positive electrode layer disposed on the positive electrode current collector, a polymer solid electrolyte layer disposed on the positive electrode layer, and a negative electrode layer disposed on the polymer solid electrolyte layer. The negative electrode layer is formed by adhering a first quasi-negative electrode layer and a second quasi-negative electrode layer to each other. Further, the battery includes a negative electrode current collector disposed on the negative electrode layer.

### BRIEF DESCRIPTION OF THE DRAWINGS

Fig. 1 is a section view showing a single cell structure of a totally solid type polymer lithium ion secondary battery using a conventional polymer solid electrolyte.
Fig. 2 is an enlarged section view illustrating states of joint planes at the time when a plurality of cells are laminated by a conventional manufacturing method and states of a plurality of gaps created between the joint planes.
Fig. 3 is an enlarged section view illustrating states of joint planes in a totally solid type polymer lithium ion secondary battery fabricated by the conventional manufacturing method, in which many gaps remain.
Figs. 4A to 4C are partial section views illustrating a single cell structure of a totally solid type polymer lithium ion secondary battery according to first to three embodiments.
Figs. 5 to 7 are section views illustrating each manufacturing method of the totally solid type lithium ion secondary battery according to the first to third embodiments.
Figs. 8 to 10 are section views illustrating each manufacturing method of the totally solid type polymer lithium ion secondary battery according to Examples 1 to 3 and a totally solid type polymer lithium ion secondary battery according to Examples 4 to 6.
Figs. 11 is a section view illustrating a manufacturing method of a totally solid type polymer lithium ion secondary battery according to Comparative Example.
Fig. 12 is a drawing illustrating a constitution of a coating apparatus used for manufacturing the totally solid type polymer lithium ion secondary battery according to Comparative Examples 4 to 6.
Fig. 13A is a drawing illustrating a microscopic photograph (magnification:180) of a section view of the totally solid type polymer lithium ion secondary battery of the example 2, and Fig. 13B is a drawing illustrating a microscopic photograph (magnification:180) of a section view of the totally solid type polymer lithium ion secondary battery of the Comparative Example.

### DESCRIPTION OF THE PREFERRED EMBODIMENTS

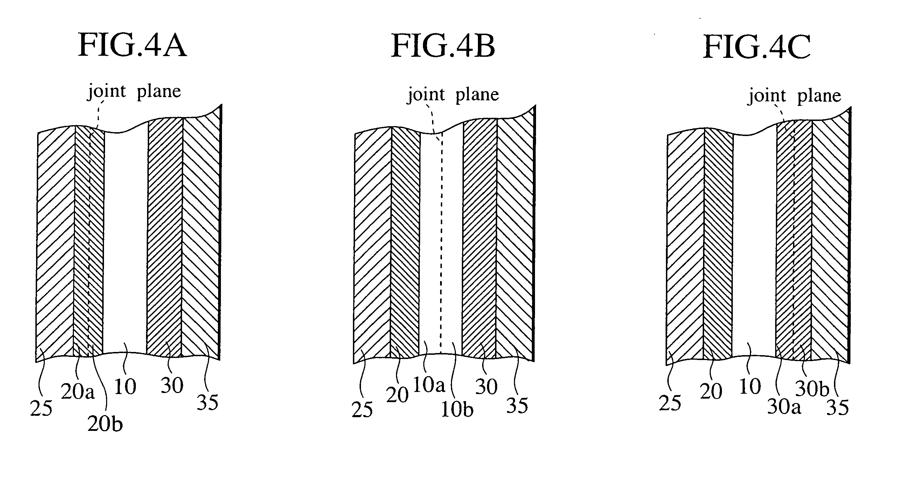

In Figs. 4A to 4C, single cell structures of totally solid type lithium ion secondary batteries (hereinafter briefly referred to as totally solid type polymer batteries) according to first to third embodiments of the present invention are illustrated. Each of these totally solid type polymer batteries has a structure in which a positive electrode current collector 25, a positive electrode layer 20, a polymer solid electrolyte layer 10, a negative electrode layer 30 and a negative electrode current collector 35 are laminated in this order. Moreover, as shown in Figs. 4A to 4C, each of these totally solid type polymer battery has an adhering plane (joint plane) in any of the positive electrode layer 20, the polymer solid electrolyte layer 10 and the negative electrode layer 30, characteristically. Specifically, in each of these totally solid type polymer batteries, a material layer formed of uniform composite is divided into two layers, and the two layers of the same material are adhered to each other. Accordingly, these two layers show a good adhesion, and hardly have gaps in a joint plane between them. Preferably, the two layers formed of the same material, which are on both sides of the joint plane, are jointed, and the two layers show a state where the joint plane between them is not almost recognized. Accordingly, since internal resistance owing to the gap of the joint plane is low, it is possible to increase energy output efficiency of the whole of the totally solid type polymer battery.

Herein, electrically conductive metals such as aluminium, aluminium alloy, titanium and SUS can be used as the positive electrode current collector 25, and particularly aluminium should be preferably used. The positive electrode layer 20 contains positive electrode active material, electrically conductive assistant, polymer and supporting electrolyte. As the positive electrode active material, for example, Li-Co based complex oxides such as LiCoO₂, Li-Ni based complex oxide such as LiNiO₂, Li-Mn based complex oxide such as LiMn₂O₄ can be used, and particularly LiMn₂O₄ should be preferably used. The polymer solid electrolyte layer 10 contains polymer and supporting electrolyte. The negative electrode layer 30 contains negative electrode active material, electrically conductive assistant, polymer and supporting electrolyte. As a negative electrode active substance, enumerated are various kinds of carbon, complex oxides formed of transition metal and lithium, lithium metals and various lithium alloys. As the negative electrode current collector 35, metals such as copper, nickel, silver and SUS can be used, and particularly nickel should be preferably used.

When the positive electrode current collector 25 and the negative electrode current collector 35 are not separated existence, and when an all-in-one type complex current collector structure comprising the positive electrode current collector 25 on its one plane and the negative electrode current collector 35 on its other plane is adopted, such a structure should be preferable when a plurality of cells are laminated. Such a complex current collector can be obtained by a method in which a metal serving as one electrode current collector is plated on one plane of a metal foil serving as the other electrode current collector by electrical plating, hot-dip plating or the like, a method in which a clad member made of a metal serving as a negative electrode current collector and made of a metal serving as a positive electrode current collector is rolled, or the like.

Hereinafter, first to third embodiments of the present invention will be described concretely.

### (First Embodiment)

A totally solid type polymer battery (lithium ion secondary battery) according to the first embodiment has a structure in which a positive electrode layer 20 is divided into two pieces 20a and 20b and the two pieces 20a and 20b are adhered to each other as shown in Fig. 4A.

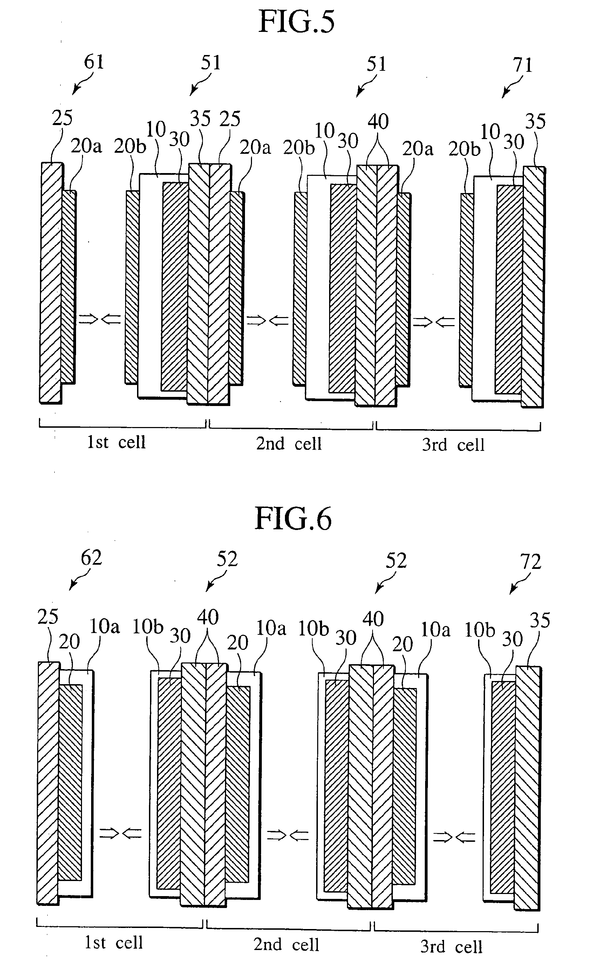

A manufacturing method of the totally solid type polymer battery according to the first embodiment will be described with reference to Fig. 5. A battery structure in which three cells are laminated will be described.

First, a clad member 40 that is a complex current collector having a positive electrode current collector 25 on one plane and a negative electrode current collector 35 on the other plane is prepared. Negative electrode slurry, which is material for a negative electrode, is coated onto the surface of the negative electrode current collector 35 of the clad member 40, and the negative electrode slurry is polymerized, thus forming a negative electrode layer 30. Polymer solid electrolyte slurry is coated onto the negative electrode layer 30, and the polymer solid electrolyte slurry is polymerized, thus forming a polymer solid electrolyte layer 10. Furthermore, positive electrode slurry is coated onto a polymer solid electrolyte layer 10 by half the normal amount thereof, and the positive electrode slurry, which is material for a positive electrode, is polymerized. A quasi-positive electrode layer 20b having a film thickness which is 1/2 times as thick as that of the final positive electrode layer is formed. On the other hand, positive electrode slurry is coated onto the surface of the positive electrode current collector 25 of the clad member 40 by half the normal amount thereof, and the positive electrode slurry is polymerized, thus forming a quasi-positive electrode layer 20b. Thus, a battery structural body 51 is obtained. Another battery structural body 51 is prepared by the same method.

Note that a positive electrode-end structural body 61, which is provided in an end section on the positive electrode current collector side of the battery, is obtained in such a manner that positive electrode slurry is coated onto the surface of the positive electrode current collector 25 by half the normal amount thereof and the positive electrode slurry is polymerized, thus forming a quasi-positive electrode layer 20a.

A negative electrode-end structural body 71, which is provided in an end section on the negative electrode current collector side of the battery, is obtained by the following manner. Specifically, negative electrode slurry is coated onto the surface of a negative electrode current collector 35, and the negative electrode slurry is polymerized, thus forming a negative electrode layer 30. Thereafter, polymer solid electrolyte slurry is coated onto the negative electrode layer 30, and the polymer solid electrolyte slurry is polymerized, thus forming a polymer solid electrolyte layer 10. Positive electrode slurry is coated onto the polymer solid electrolyte layer 10 by half the normal amount thereof, and the positive electrode slurry is polymerized, thus forming a quasi-positive electrode layer 20b.

As shown in Fig. 5, the two battery structural bodies 51, the positive electrode-end structural body 61 and the negative electrode-end structural body 71 are adhered to each other so that the quasi-positive electrode layers 20a and 20b of the respective structural bodies are joint planes. When the respective structural bodies are adhered to each other, the respective structural bodies may be pressed to each other in their thickness direction. Thus, the totally solid type polymer battery having first to third cells is obtained.

In each positive electrode layer 20, the joint plane remains. However, since each positive electrode layer 20 is formed by adhering the same materials to each other, the joint plane of each positive layer 20 shows better adhesion compared to the conventional battery formed by adhering different materials. Further, in the totally solid type polymer battery according to the first embodiment, gaps that are non-joint sections hardly remain in the joint plane.

Note that if the joint planes of the quasi-positive electrode layers 20a and 20b are formed to be a flat mirror plane, it is possible to further reduce the gaps in the joint plane.

Note that though adhering of the quasi-positive electrode layers 20a and 20b is conducted after polymerizing the positive electrode slurries, if the quasi-positive electrode layers 20a and 20b are polymerized after jointing them, the adhesion of the joint planes thereof is further improved.

In the foregoing method, the thickness of the quasi-positive electrode layers 20a and 20b is not particularly limited.

### (Second Embodiment)

A totally solid polymer battery (lithium ion secondary battery) according to the second embodiment has a structure in which a polymer solid electrolyte layer 10 is divided into two pieces 10a and 10b and the two pieces 10a and 10b are adhered to each other as shown in Fig. 4B.

A manufacturing method of the totally solid polymer battery according to the second embodiment will be described with reference to Fig. 6 below. Herein, descriptions are made as to a battery structure in which three cells are laminated.

First, a clad member 40 that is a complex current collector having a positive electrode current collector 25 on one plane and a negative electrode current collector 35 on the other plane is prepared. Negative electrode slurry is coated onto the surface of the negative electrode current collector 35 of the clad member 40, and the negative electrode slurry is polymerized, thus forming a negative electrode layer 30. Polymer solid electrolyte slurry is coated onto the negative electrode layer 30 only by half the normal amount thereof, and the polymer solid electrolyte slurry is polymerized, thus forming a quasi-polymer solid electrolyte layer 10a. Next, positive electrode slurry is coated onto the surface of a positive electrode current collector 25 of the clad member 40, and the positive electrode slurry is polymerized, thus forming a positive electrode layer 20. Moreover, slurry for a polymer solid electrolyte is coated onto the positive electrode layer 20 by half the normal amount thereof, and the slurry is polymerized, thus forming a quasi-polymer solid electrolyte layer 10b. Thus, a battery structural body 52 is obtained. Another battery structural body 52 is prepared by the same method.

A positive electrode-end structural body 62, which is provided in one end section on the positive electrode current collector side of the battery, is obtained by the following manner. Specifically, positive electrode slurry is coated onto the surface of a positive electrode current collector 25, and the positive electrode slurry is polymerized, thus forming a positive electrode layer 20. Thereafter, slurry for a polymer solid electrolyte is coated onto the positive electrode layer 20 by half the normal amount thereof, and the slurry is polymerized, thus forming a quasi-polymer solid electrolyte layer 10a. Thus, the positive electrode-end structural body 62 is obtained.

Furthermore, a negative electrode-end structural body 72, which is provided in one end section on the negative electrode current collector side of the battery, is obtained by the following manner. Negative electrode slurry is coated onto the surface of a negative electrode current collector 35, and the negative electrode slurry is polymerized, thus forming a negative electrode layer 30. Thereafter, slurry for a polymer solid electrolyte is coated onto the negative electrode layer 30 by half the normal amount thereof, and the slurry is polymerized, thus forming a quasi-polymer solid electrolyte layer 10b. Thus, the negative electrode-end structural body 72 is obtained.

As shown in Fig. 6, the two battery structural bodies 52, the positive electrode-end structural body 62 and the negative electrode-end structural body 72 are adhered so that the quasi-polymer solid electrolyte layers 10a and 10b of the structural bodies are joint planes. When the respective structural bodies are adhered to each other, the respective structural bodies may be pressed to each other in their thickness direction. Thus, the totally solid type polymer battery having first to third cells is obtained.

Although the joint plane remains in the polymer solid electrolyte layer 10, this joint plane is formed by adhering the same materials. Accordingly, the polymer solid electrolyte layer 10 shows better adhesion compared to the conventional battery formed by adhering different materials, and gaps that are non-joint sections hardly remain in the joint plane.

Particularly, in the case of the totally solid polymer battery according to the second embodiment, since the polymer solid electrolyte layers showing relatively high flexibility are adhered to each other, gaps owing to non-joint portion are hardly formed, and it is possible to secure a good ion conductivity.

Adhering of the quasi-positive electrode layers 10a and 10b is conducted after polymerizing the polymer solid electrolyte slurry in the foregoing method. However, the quasi-polymer solid electrolyte layers 10a and 10b, which are not polymerized yet, are adhered to each other, and then may be polymerized by heating them. According to this method, it is possible to further improve the adhesion of the joint planes.

### (Third Embodiment)

As shown in Fig. 4C, a totally solid polymer battery (lithium ion secondary battery) according to the third embodiment has a structure in which a negative electrode layer 30 is divided into two pieces 30a and 30b and the two pieces 30a and 30b are adhered to each other.

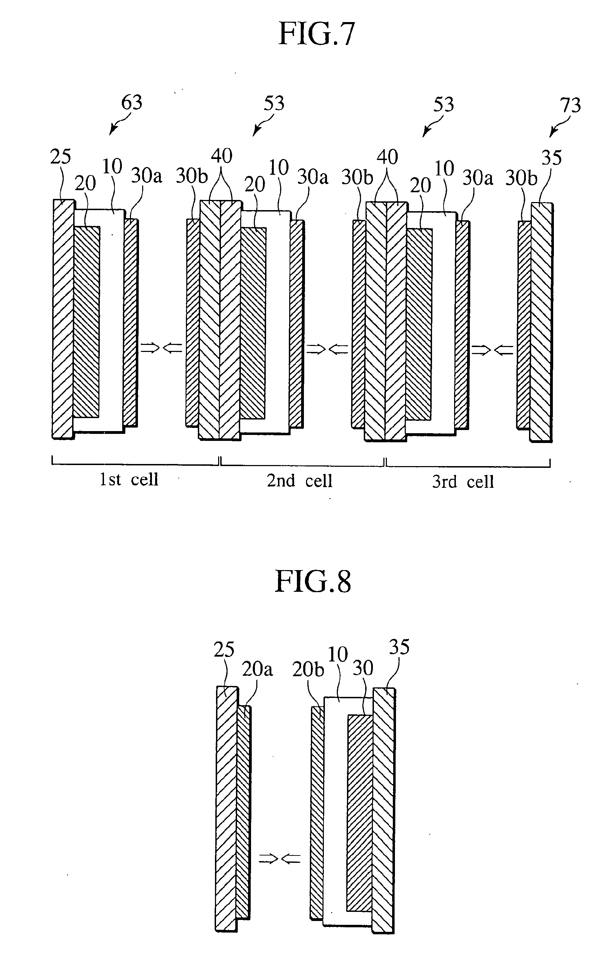

A manufacturing method of the totally solid polymer battery according to the third embodiment will be described with reference to Fig. 7 below. Herein, descriptions as to a battery structure in which three cells are laminated are made.

First, a clad member 40 that is a complex current collector having a positive electrode current collector 25 on one plane and a negative electrode current collector 35 on the other plane is prepared. Positive electrode slurry is coated onto the surface of the positive electrode current collector 25 of the clad member 40, and the positive electrode slurry is polymerized, thus forming a positive electrode layer 20. Polymer solid electrolyte slurry is coated onto the positive electrode layer 20, and the polymer solid electrolyte slurry is polymerized, thus forming a polymer solid electrolyte layer 10. Moreover, negative electrode slurry is coated onto the polymer solid electrolyte layer 10 by half the normal amount thereof, and the negative electrode slurry is polymerized, thus forming a quasi-negative electrode layer 30b.

On the other hand, negative electrode slurry is coated onto the surface of the negative electrode current collector 35 of the clad member 40 by half the normal amount thereof, and the negative electrode slurry is polymerized, thus forming a quasi-negative electrode layer 30b. Thus, a battery structural body 53 is obtained.

A positive electrode-end structural body 63, which is provided in one end section on the positive electrode collector side of the battery, is obtained in the following manner. Specifically, positive electrode slurry is coated onto the surface of a positive electrode current collector 25, and the positive electrode slurry is polymerized, thus forming a positive electrode layer 20. Thereafter, polymer solid electrolyte slurry is coated onto the positive electrode layer 20, and the polymer solid electrolyte slurry is polymerized, thus forming a polymer solid electrolyte layer 10. Negative electrode slurry is coated onto the polymer solid electrolyte layer 10 by half the normal amount thereof, and the negative electrode slurry is polymerized, thus forming a quasi-negative electrode layer 30b. Thus, the positive electrode-end structural body 63 is obtained.

A negative electrode-end structural body 73, which is provided in the one end section on the negative electrode current collector side of the battery, is obtained in the following manner. Specifically, negative electrode slurry is coated onto the surface of a negative electrode current collector 35 by half the normal amount thereof, and the negative electrode slurry is polymerized, thus forming a quasi-negative electrode layer 30a. Thus, the negative electrode-end structural body 73 is obtained.

As shown in Fig.7, the two battery structural bodies 53, the positive electrode-end structural body 63 and the negative electrode-end structural body 73 are adhered to each other so that the quasi-negative electrode layers 30a and 30b of the respective structural bodies are joint planes. When the structural bodies are adhered, the whole of them may be pressed in their thickness direction. Thus, the totally solid polymer battery having first to third cells is obtained.

In each negative electrode layer 30, the joint plane remains. However, since this joint plane is formed by adhering the same materials to each other, the joint plane shows better adhesion compared to the case where different materials are adhered as conventional. Further, in the totally solid polymer battery, gaps that are non-joint sections hardly remain in the joint plane.

Note that if the joint planes of the quasi-negative electrode layers 30a and 30b are formed to be a flat mirror plane, it is possible to further reduce the gaps in the joint plane.

Adhering of the quasi-negative electrode layers 30a and 30b is conducted after polymerizing the negative electrode slurry in the foregoing method. However, the quasi-negative electrode layers 30a and 30b, which are not polymerized yet, are adhered, and then may be polymerized by heating them. According to this method, the adhesion of the joint planes thereof is further improved.

In the foregoing method, the thickness of each of the quasi-negative electrode layers 30a and 30b is not particularly limited.

In the foregoing first to third embodiments, the clad member 40 in which the positive electrode current collector 25 and the negative electrode current collector 35 are united is used. When the same material, for example, SUS or the like, is used for the positive electrode current collector 25 and the negative electrode current collector 35, steps for preparing the clad member 40 by uniting two current collectors can be omitted.

### Examples

### (Example 1)

The positive electrode slurry was prepared by mixing and dispersing the following materials by use of a homogenous mixer: (a) a substance obtained by dissolving AIBN (azobisisobutylnitryl) of 0.02 part by weight and Li(C₂F₅SO₂)₂N of 8 parts by weight, which is electrolyte supporting salt, into N-methyl-2-pyrrolidone solvent, (b) polymerization polymer of 15 parts by weight, (c) LiMn₂O₄ of 26 parts by weight, which is a positive electrode active substance, and (d) acetylene black of 8 parts by weight, which is an electrically conductive assistant. Note that copolymer of polyethylene oxide and polypropylene oxide expressed by the following chemical formula (f1) was used as the polymerization polymer.

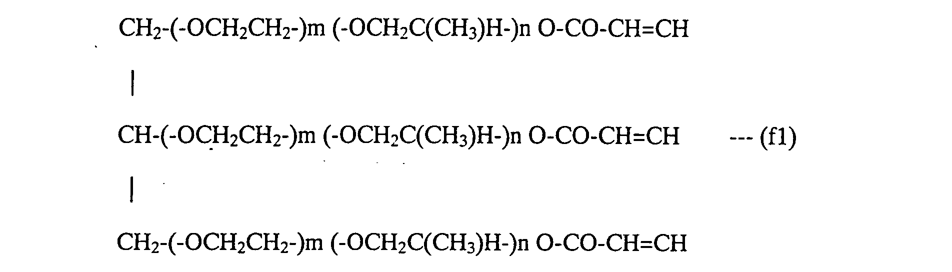

When the positive electrode layer was prepared, the foregoing positive electrode slurry was coated onto the Al positive electrode current collector or the polymer solid electrolyte layer by use of a coater, and the positive electrode slurry was thermally polymerized by use of a vacuum oven at 120 °C, followed by drying the slurry in vacuum at 90 °C.

The negative electrode slurry was prepared by mixing and dispersing the following materials by use of a homogenous mixer: (a) a substance obtained by dissolving AIBN (azobisisobutylnitryl) of 0.02 part by weight and Li(C₂F₅SO₂)₂N of 8 parts by weight, which is electrolyte supporting salt, into N-methyl-2-pyrrolidone solvent, (b) polymerization polymer of 15 parts by weight, (c) Li₄Ti₅O₁₂ of 26 parts by weight, which is a negative electrode active substance, and (d) acetylene black of 8 parts by weight, which is an electrically conductive assistant. Note that copolymer of polyethylene oxide and polypropylene oxide shown by the chemical formula (f1) was used as the polymerization polymer similarly to the positive electrode slurry.

When the negative electrode layer was prepared, the negative electrode slurry was coated onto the Ni negative electrode current collector or the polymer solid electrolyte layer by use of a coater, and the negative electrode slurry was thermally polymerized by use of an vacuum oven at 120 °C, followed by drying the slurry in vacuum at 90 °C.

The polymer solid electrolyte slurry was prepared by mixing: (a) a substance obtained by dissolving BDK (benzyldimethylketal) of 0.1 part by weight and Li(C₂F₅SO₂)₂N of 8 part by weight, which is electrolyte supporting salt, into N-methyl-2-pyrrolidone solvent, and (b) polymerization polymer of 100 parts by weight. Note that copolymer of polyethylene oxide and polypropylene oxide shown by the chemical formula (f1) was used as the polymerization polymer similarly to the positive electrode slurry.

When the polymer solid electrolyte layer was prepared, the polymer solid electrolyte layer was prepared in the following manner. Specifically, the slurry was coated onto the positive electrode layer or the negative electrode layer so that the thickness of the slurry was about 60 to 80 µm. Polypropylene film having a thickness of about 30 µm, on which silicone based release agent was coated and dried, was superposed on the slurry so that the plane thereof, where the release agent was coated, faced the slurry. Then, ultraviolet ray was radiated thereonto for 20 minutes, and polymer in the slurry was polymerized. After curing, the polypropylene film was peeled off from the positive electrode layer or the negative electrode layer coated with the slurry, and, thereafter, the positive electrode layer or the negative electrode layer coated with the slurry is dried in vacuum at 90 °C, thus forming the polymer solid electrolyte layer on the positive electrode layer or the negative electrode layer.

In Example 1, the totally solid polymer battery having a structure as shown in Fig. 8, in which the positive electrode layer 20 is divided into the two pieces 20a and 20b and both pieces 20a and 20b are adhered to each other by use of the foregoing slurry, was prepared according to the following procedures.

First, negative electrode slurry was coated onto a Ni negative electrode current collector 35, and a negative electrode layer 30 was prepared by the foregoing method. Furthermore, polymer solid electrolyte slurry was coated onto the negative electrode layer 30, and a polymer solid electrolyte layer 10 was prepared by the foregoing method. Then, positive electrode slurry was coated onto the polymer solid electrolyte layer 10 by half the normal amount thereof, and a quasi-positive electrode layer 20b was formed by the foregoing method of manufacturing a positive electrode layer.

Next, positive electrode slurry was coated onto an Al positive electrode current collector 25 by half the normal amount thereof, and a quasi-positive electrode layer 20a was formed by the foregoing method of manufacturing a positive electrode layer.

As shown in Fig. 8, a positive electrode-side structural body and a negative electrode-side structural body were adhered to each other, and the totally solid polymer battery of Example 1 was obtained.

### (Example 2)

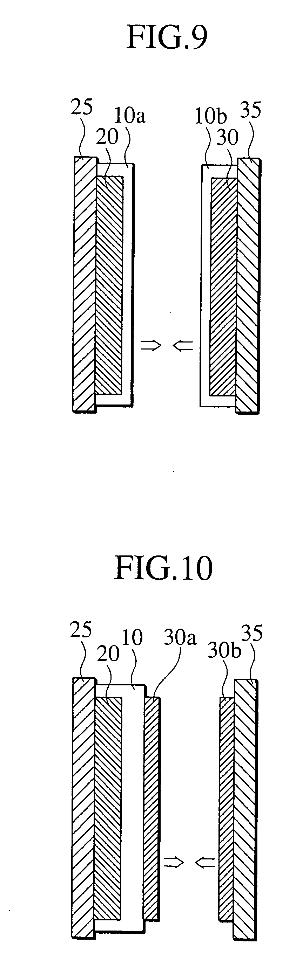

In Example 2, a totally solid polymer electrolyte battery, in which a polymer solid electrolyte layer 10 was divided into two pieces 10a and 10b as shown in Fig. 9 and the two pieces 10a and 10b were adhered to each other, was prepared by the following procedures.

Note that in methods of preparing positive electrode slurry, negative electrode slurry and polymer solid electrolyte slurry and in methods of preparing a positive electrode layer, a negative electrode layer and a polymer solid electrolyte layer, the same conditions as those in Example 1 were used.

First, the negative electrode slurry was coated onto the Ni negative electrode current collector 35, and the negative electrode slurry was polymerized by the same method as Example 1 and dried, thus forming the negative electrode layer 30. Furthermore, the polymer solid electrolyte slurry is coated onto the negative electrode layer 30 by half the normal amount thereof, and the quasi-polymer solid electrolyte layer 10b having a thickness of about 30 to 40 µ m was formed by use of the method of manufacturing the polymer solid electrolyte layer of Example 1.

Next, the positive electrode slurry was coated onto the positive electrode current collector 25, and the positive electrode slurry was polymerized by the same method as Example 1, thus forming the positive electrode layer 20. The polymer solid electrolyte slurry was coated onto the positive electrode layer 20 by half the normal amount thereof, and the quasi-polymer solid electrolyte 10a is formed by the same method.

As shown in Fig. 9, a positive electrode-side structural body and a negative electrode-side structural body were adhered to each other, and the totally solid polymer battery of Example 2 was obtained.

### (Example 3)

In Example 3, a totally polymer solid battery, in which a negative electrode layer 30 was divided into two pieces 30a and 30b as shown in Fig. 10 and the two pieces 30a and 30b were adhered to each other, was prepared by the following procedures. Note that in methods of preparing positive electrode slurry, negative electrode slurry and polymer solid electrolyte slurry and in methods of preparing a positive electrode layer, a negative electrode layer and a polymer solid electrolyte layer, the same conditions as those in Example 1 were used.

First, the positive electrode slurry was coated onto the Al positive electrode current collector 25, and the positive electrode slurry was polymerized by the same method as Example 1 and dried, thus forming the positive electrode layer 20. Furthermore, the polymer solid electrolyte slurry is coated onto the positive electrode layer 20, and the polymer solid electrolyte layer 10 was formed by the same method as Example 1. Furthermore, the negative electrode slurry is coated onto the polymer solid electrolyte layer 10 by half the normal amount thereof, and the quasi-negative electrode layer 30b was formed by use the manufacturing method of the negative electrode layer of Example 1.

Next, the negative electrode slurry was coated onto the Ni negative electrode current collector 35 by half the normal amount thereof, and the quasi-negative electrode layer 30a was formed by the same method.

As shown in Fig. 10, a positive electrode-side structural body and a negative electrode-side structural body were adhered to each other, and the totally solid polymer battery of Example 3 was obtained.

### (Comparative Example)

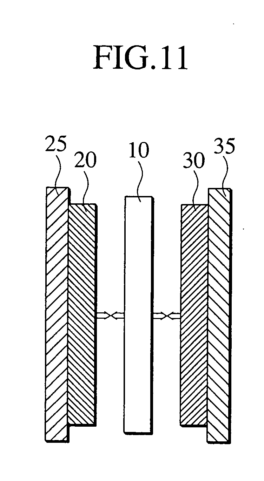

In Comparative Example 3, any of a positive electrode layer 20, a polymer solid electrolyte layer 10 and a negative electrode layer 30 was not divided as shown in Fig. 11, and a totally solid polymer battery was prepared by the following procedures. In methods of preparing positive electrode slurry, negative electrode slurry and polymer solid electrolyte slurry and in methods of preparing the positive electrode layer and the negative electrode layer, the same conditions as those in Example 1 were used.

The preparation of the polymer solid electrolyte layer was performed in the following manner. Specifically, polymer solid electrolyte slurry was coated onto a glass plate. Spacers having a thickness of about 50 µm were disposed on the edges of the glass plate, another glass plate was covered onto the glass plate with the spacers, and then the coated slurry was polymerized by use of ultraviolet ray irradiation. The single sheet of the polymer solid electrolyte layer was obtained by peeling it off the glass plate.

The positive electrode slurry was coated onto the Al positive electrode current collector 25, and the positive electrode slurry was polymerized and dried, thus forming the positive electrode layer 20. The negative electrode slurry was coated onto the Ni negative electrode current collector 35, and the negative electrode slurry was polymerized and dried, thus forming the negative electrode layer 30.

As shown in Fig. 11, the polymer solid electrolyte layer 10 was sandwiched b the positive electrode-side structural body and the negative electrode-side structura body, and they were adhered to each other. The totally solid polymer battery o 5 Comparison Example 3, which has the joint planes at the boundaries of the positiv electrode layer 20, the polymer solid electrolyte layer 10 and the negative electrod layer 30, was obtained.

### (Example 4)

The positive electrode slurry was prepared by mixing and dispersing the following materials by use of a homogenous mixer: (a) a substance obtained by dissolving AIBN (azobisisobutylnitryl) of 0.31 part by weight and Li(C₂F₅SO₂)₂N of 79 parts by weight, which is electrolyte supporting salt, into N-methyl-2-pyrrolidone solvent, (b) polymerization polymer of 156 parts by weight, (c) LiMn₂O₄ of 260 parts by weight, which is a positive electrode active substance, and (d) acetylene black of 78 parts by weight, which is an electrically conductive assistant. Note that copolymer of polyethylene oxide and polypropylene oxide expressed by the chemical formula (f1) which is described in above, was used as the polymerization polymer.

The negative electrode slurry was prepared by mixing and dispersing the following materials by use of a homogenous mixer: (a) a substance obtained by dissolving AIBN (azobisisobutylnitryl) of 0.78 part by weight and Li(C₂F₅SO₂)₂N of 198 parts by weight, which is electrolyte supporting salt, into N-methyl-2-pyrrolidone solvent, (b) polymerization polymer of 390 parts by weight, (c) Li₄Ti₅O₁₂ of 260 parts by weight, which is a negative electrode active substance, and (d) acetylene black of 78 parts by weight, which is an electrically conductive assistant. Note that copolymer of polyethylene oxide and polypropylene oxide shown by the chemical formula (f1) was used as the polymerization polymer similarly to the positive electrode slurry.

The polymer solid electrolyte slurry was prepared by mixing (a) a substance obtained by dissolving BDK (benzyldimethylketal) of 0.1 part by weight and Li(C₂F₅SO₂)₂N of of 8 part by weight, which is electrolyte supporting salt, into N-methyl-2-pyrrolidone solvent of 20 parts by weight and (b) polymerization polymer of 100 parts by weight. Note that copolymer of polyethylene oxide and polypropylene oxide shown by the chemical formula (f1) was used as the polymerization polymer similarly to the positive electrode slurry.

A SUS foil was used as the positive electrode current collector and the negative electrode current collector.

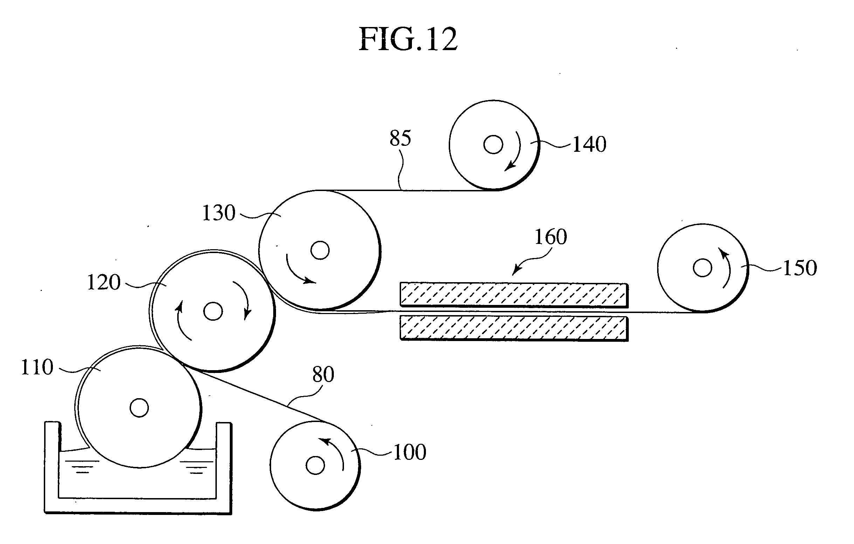

A structure of a slurry coating apparatus used in Examples 4 to 6 is shown in Fig. 12. As shown in Fig. 12, the slurry coating apparatus has a roll 100 for the SUS foil serving as the current collector, a slurry tank 170 containing the positive electrode slurry, the negative electrode slurry or the polymer solid electrolyte slurry, a coating roll 110 set up so as to be partially dipped in slurry liquid, assisting rolls 120 and 130 for assisting the progress of the SUS foil, a roll for the SUS foil having a surface which was subjected to a mold releasing treatment by silicone based released agent, an oven 160 polymerizing the slurry, and a winding roll 150.

As shown in Fig. 12, when the SUS foil 80 drawn out from the SUS foil roll 100 passes through the gap of the assisting roll 120 and the coating roll 110, the slurry attached to the surface of the coating roll 110 is coated onto the surface of the SUS foil roll 100. Furthermore, when the SUS foil 80 passes through the gap of the assisting rolls 120 and 130, the SUS foil 80 is pressed to another SUS foil 85, which was subjected to the mold releasing treatment, so as to interpose slurry coating layers therebetween. The slurry coating layers are thermally polymerized and become a polymerized layer in the course when the pressed SUS foils 80 and 85 pass through the oven 160. Thereafter, the SUS foils 80 and 85 pressed to each other are rolled up by the winding roll 150. When the lithium ion secondary battery was formed, the SUS foil 85, which was subjected to the mold releasing treatment, is peeled off and the SUS foil 80 and the polymerized layer alone remain. When the positive electrode slurry is used as the slurry, a structural body composed of the positive electrode layer and the positive electrode current collector is produced. When the negative electrode slurry is used as the slurry, a structural body composed of the negative electrode layer and the negative electrode current collector is produced.

When the polymer solid electrolyte layer is formed on the positive electrode layer, a lamination body in which the positive electrode layer is formed on one plane of the SUS foil 80 is previously prepared. When the roll of this lamination body is provided in the SUS foil roll 100 and the polymer solid electrolyte slurry is used as the slurry, a structure in which the positive electrode layer and the polymer solid electrolyte layer are laminated on the SUS foil can be obtained similarly. In this case, the polymer solid electrolyte slurry is thermally polymerized similarly to the case where the positive electrode slurry and the negative electrode slurry are thermally polymerized. It is possible to prepare various kinds of other lamination structures by use of the coating apparatus of Fig. 12, similarly. The same method can be also adopted when the polymer solid electrolyte layer is formed on the negative electrode layer and when the positive or negative electrode layer is formed on the polymer solid electrolyte layer.

In Example 4, the totally solid polymer battery in which the positive electrode layer 20 was divided into the two pieces 20a and 20b and the two pieces 20a and 20b were adhered to each other was prepared as shown in Fig. 8 by the following procedures similarly to Example 1. Note that the coating apparatus shown in Fig. 12 was used in the coating, polymerization and drying each slurry.

The negative electrode slurry was coated onto the SUS negative electrode current collector 35, and the negative electrode slurry was polymerized, thus forming the negative electrode layer 30. Furthermore, the polymer solid electrolyte slurry was coated onto the negative electrode layer 30, and the polymer solid electrolyte slurry was thermally polymerized, thus forming the polymer solid electrolyte layer 10. Then, the positive electrode slurry was coated onto the polymer solid electrolyte layer 10 by half the normal amount thereof, and the positive electrode slurry was polymerized and dried, thus forming the quasi-positive electrode layer 20b.

Next, the positive electrode slurry was coated onto the SUS positive electrode current collector 25 by half the normal amount thereof, and the positive electrode slurry was polymerized and dried, thus forming the quasi-positive electrode layer 20a.

As shown in Fig. 8, a positive electrode-side structural body and a negative electrode-side structural body were adhered to each other, and the totally solid polymer battery of Example 4 was obtained.

### (Example 5)

In Example 5, a totally solid polymer electrolyte battery, in which a polymer solid electrolyte layer 10 was divided into two pieces 10a and 10b as shown in Fig. 9 and the two pieces 10a and 10b were adhered to each other, was prepared by the following procedures.

Note that in methods of preparing positive electrode slurry, negative electrode slurry and polymer solid electrolyte slurry and in methods of preparing a positive electrode layer, a negative electrode layer and a polymer solid electrolyte layer, the same conditions as those in Example 4 were used.

First, the negative electrode slurry was coated onto the SUS negative electrode current collector 35, and the negative electrode slurry was polymerized and dried, thus forming the negative electrode layer 30. Furthermore, the polymer solid electrolyte slurry was coated onto the negative electrode layer 30 by half the normal amount thereof and the polymer solid electrolyte slurry was polymerized, thus forming the quasi-polymer solid electrolyte layer 10b.

Next, the positive electrode slurry was coated onto the SUS positive electrode current collector 25, and the positive electrode slurry was polymerized, thus forming the positive electrode layer 20. The slurry for the electrolyte layer was coated onto the positive electrode layer 20 by half the normal amount thereof, and the slurry for the electrolyte layer was polymerized, thus forming the quasi-polymer solid electrolyte layer 10a.

As shown in Fig. 9, a positive electrode-side structural body and a negative electrode-side structural body were adhered to each other, and the totally solid polymer battery of Example 5 was obtained.

### (Example 6)

In Example 6, a totally solid polymer electrolyte battery, in which a negative electrode layer 30 was divided into two pieces 30a and 30b as shown in Fig. 10 and the two pieces 30a and 30b were adhered to each other, was prepared by the following procedures. Note that in methods of preparing positive electrode slurry, negative electrode slurry and polymer solid electrolyte slurry and in methods of preparing a positive electrode layer, a negative electrode layer and a polymer solid electrolyte layer, the same conditions as those in Example 4 were used.

First, the positive electrode slurry was coated onto the SUS positive electrode current collector 25, and a positive electrode layer 20 was formed by the foregoing method. Polymer solid electrolyte slurry was coated onto the positive electrode layer 20, and a polymer solid electrolyte layer 10 was prepared by the same method as that in Example 1. Furthermore, the negative electrode slurry was coated onto the polymer solid electrolyte layer 10 by half the normal amount thereof, and the negative electrode slurry was polymerized and dried by the foregoing method, thus forming a quasi-negative electrode layer 30b.

Next, negative electrode slurry was coated onto a SUS negative electrode current collector 35 by half the normal amount thereof, and the negative electrode slurry was polymerized and dried by the foregoing method, thus forming a qausi-negative electrode layer 30a.

As shown in Fig. 10, a positive electrode-side structural body and a negative electrode-side structural body were adhered to each other, and a totally solid polymer battery of Example 6 was obtained.

### (Measurement of Internal Resistance )

Confirmation of internal resistance by an AC impedance method was conducted for the totally solid polymer battery obtained as described above. The internal resistance was measured under the conditions that the battery was charged with a constant current (20 mA) until 2.7 V and then charged with a constant voltage higher than 2.7 V for 8 hours in total. Measurement results are shown in Table 1. In the case of Examples 1 to 3, the internal resistance can be reduced to 1/2 or less compared to Comparison Example.

**Table 1**

| | Internal Resistance (Ω) |
|---|---|
| Example 1 | 24 |
| Example 2 | 18 |
| Example 3 | 23 |
| Comparative Example | 61 |

### (Observation of Section of Joint Plane)

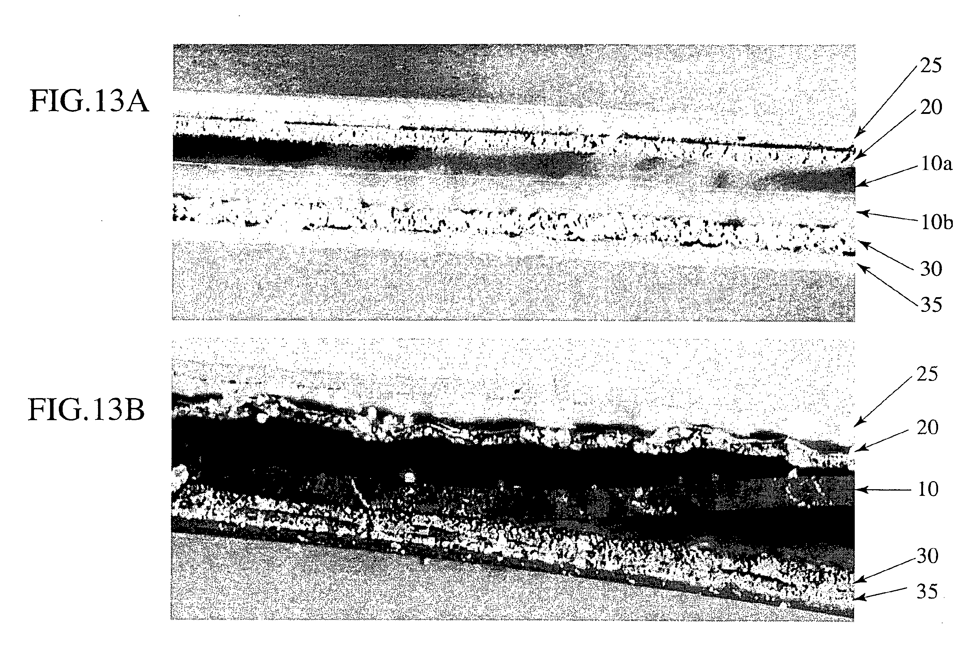

In Fig. 13A shows a drawing of an optical microscopic photograph of the section of the totally solid polymer battery of Comparative Example. It is apparent that large gaps exist in the joint planes between the polymer solid electrolyte layer 10 and the negative electrode layer 30 and between the polymer solid electrolyte layer 10 and the positive electrode layer 20.

On the other hand, a drawing of an optical microscopic photograph of the section of the totally solid polymer battery of Example 2 is shown. The polymer solid electrolyte layer 10, the negative electrode layer and the positive electrode layer are appressed to each other almost perfectly. No gaps as Comparative Example exist.

As described above, in the totally solid polymer battery, structural bodies in which the same material layers showing relatively high adhesion are divided to two pieces is prepared, and the structural body is adhered to other structural bodies. Thus, the totally solid polymer battery showing reduced internal resistance and high charging/discharging efficiency can be obtained.

Particularly, in the totally solid polymer battery having a structure in which the polymer solid electrolyte layer is divided into two pieces are laminated, since such a polymer solid electrolyte layer is flexible, it is easier to prepare the totally solid polymer battery without gaps and to reduce the internal resistance.

The entire contents of Japanese Patent Applications P2001-227536 (filed: July 27, 2001) and P2002-213527 (filed: July 23, 2002) are incorporated herein by reference. Although the inventions have been described by reference to certain embodiments of the inventions, the inventions are not limited to the embodiments described above. Modifications and variations of the embodiments described above will occur to those skilled in the art, in light of the above teachings. The scope of the inventions is defined with reference to the following claims.

## Claims

1. A method of manufacturing a totally solid type lithium ion secondary battery, comprising:
forming a first quasi-positive electrode layer on a positive electrode current collector;
forming a negative electrode layer on a negative electrode current collector;
forming a polymer solid electrolyte layer on the negative electrode layer;
forming a second quasi-positive electrode layer on the polymer solid electrolyte layer; and
adhering the first quasi-positive electrode layer and the second quasi-positive electrode layer to each other, thus forming a positive electrode layer.

2. The method according to claim 1, wherein
each formation of the first quasi-positive electrode layer, the negative electrode layer, the polymer solid electrolyte layer and the second quasi-positive electrode layer comprises:
coating slurry containing polymerization polymer; and
polymerizing the polymerization polymer.

3. The method according to claims 1 or 2, wherein:
(1) each formation of the negative electrode layer and the polymer solid electrolyte layer comprises:
coating slurry containing polymerization polymer; and
polymerizing the polymerization polymer,
(2) each formation of the first quasi-positive electrode layer and the second quasi-positive electrode layer comprises:
coating slurries containing polymerization polymer, and
(3) the formation of the positive electrode layer comprises:
polymerizing the polymerization polymer contained in the first and second quasi-positive electrode layers adhered to each other.

4. A method of manufacturing a totally solid type polymer lithium ion secondary battery, comprising:
forming a positive layer on a positive electrode current collector;
forming a first quasi-polymer solid electrolyte layer on the positive electrode layer;
forming a negative electrode layer on a negative electrode current collector;
forming a second quasi-polymer solid electrolyte layer on the negative electrode layer; and
adhering the first quasi-polymer solid electrolyte layer and the second quasi-polymer solid electrolyte layer to each other, thus forming a polymer solid electrolyte layer.

5. The method according to claim 4, wherein:
each formation of the positive electrode layer, the first quasi-polymer solid electrolyte layer, the negative electrode layer and the second quasi-polymer solid electrolyte layer comprises:
coating slurry containing polymerization polymer; and
polymerizing the polymerization polymer.

6. The method according to claims 4 or 5, wherein:
(1) each formation of the negative electrode layer and the positive electrode layer comprises:
coating slurry containing polymerization polymer; and
polymerizing the polymerization polymer,
(2) each formation of the first and second quasi-polymer solid electrolyte layers comprises:
coating slurries containing polymerization polymer, and
(3) the formation of the polymer solid electrolyte layer comprises:
polymerizing the polymerization polymer contained in the first quasi-polymer solid electrolyte layer and the second quasi-polymer solid electrolyte layer adhered to each other.

7. A method of manufacturing a totally solid type polymer lithium ion secondary battery, comprising
forming a positive layer on a positive electrode current collector;
forming a polymer solid electrolyte layer on the positive electrode layer;
forming a first quasi-negative electrode layer on the polymer solid electrolyte layer;
forming a second quasi-negative electrode layer on a negative electrode current collectors and
adhering the first quasi-negative electrode layer and the second quasi-negative electrode layer to each other, thus forming a negative electrode layer..

8. The method according to claim 7, wherein:
each formation of the positive electrode layer, the polymer electrolyte layer, the first quasi-negative electrode layer and the second quasi-negative electrode layer comprises:
coating slurry containing polymerization polymer; and
polymerizing the polymerization polymer.

9. The method according to claims 7 or 8, wherein:
(1) each formation of the positive electrode layer and the polymer solid electrolyte layer comprises:
coating slurry containing polymerization polymer; and
polymerizing the polymerization polymer,
(2) each formation of the first quasi-negative electrode layer and the second quasi-negative electrode layer comprises:
coating slurry containing polymerization polymer, and
(3) the formation of the negative electrode layer comprises polymerizing the polymerization polymer contained in the first quasi-negative electrode layer and the second quasi-negative electrode layer adhered to each other.

10. A totally solid type polymer lithium ion secondary battery manufactured by the method of claim 1, comprising:
a positive electrode current collector;
a positive electrode layer disposed on the positive electrode current collector, the positive electrode layer being composed of a first quasi-positive electrode layer and second quasi-positive electrode layer adhered to each other;
a polymer solid electrolyte layer disposed on the positive electrode layer;
a negative electrode layer disposed on the polymer solid electrolyte layer; and
a negative electrode current collector disposed on the negative electrode layer.

11. A totally solid type polymer lithium ion secondary battery manufactured by the method of claim 4, comprising:
a positive electrode current collector;
a positive electrode layer disposed on the positive electrode current collector;
a polymer solid electrolyte layer disposed on the positive electrode layer, the polymer solid electrolyte layer being composed of a first quasi-polymer solid electrolyte layer and a second quasi-polymer solid electrolyte layer adhered to each other;
a negative electrode layer disposed on the polymer solid electrolyte layer; and
a negative electrode current collector disposed on the negative electrode layer.

12. A totally solid type polymer lithium ion secondary battery manufactured by the method of claim 7, comprising:
a positive electrode current collector;
a positive electrode layer disposed on the positive electrode current collector;
a polymer solid electrolyte layer disposed on the positive electrode layer;
a negative electrode layer disposed on the polymer solid electrolyte layer, the negative electrode layer being composed of a first quasi-negative electrode layer and a second quasi-negative electrode layer adhered to each other; and
a negative electrode current collector disposed on the negative electrode layer.

13. The totally solid type polymer lithium ion battery according to any one of claims 10 to 12, wherein:
the positive electrode layer, the negative electrode layer and the polymer solid electrolyte layer comprise a common copolymer.
